# FASCICULE DE BREVET EUROPEEN

(11) **EP 1 296 023 B1**
(45) Date de publication et mention de la délivrance du brevet: **06.04.2005**
(21) Numéro de dépôt: 02292281.9
(22) Date de dépôt: 18.09.2002
(51) Int. Cl.: F01D 11/00, F16J 15/08, F01D 9/02, F01D 9/04

(54) **Dispositif de maintien des joints à lamelles d'étanchéité**
Haltevorrichtung für Dichtstreifen
Fixing device for seal strips

(30) Priorité: 20.09.2001 FR 0112133
(43) Date de publication de la demande: 26.03.2003
(73) Titulaire: Snecma Moteurs, 75015 Paris (FR)
(72) Inventeur: Antunes, Serge-Louis, 77380 Combs la Ville (FR); Marchi, Marc, 77350 Le Mee (FR); Gazeau, Patrick, Pierre, Bernard, 78830 Bullion (FR); Rosset, Patrice, Jean-Marc, 77350 Le Mee (FR)

(56) Documents cités:
- EP-A- 1 002 972
- WO-A-01/71175
- FR-A- 2 649 463
- US-A- 4 126 405
- US-A- 5 797 723

## Description

L'invention concerne le problème de l'étanchéité, dans une turbomachine, entre une veine aérodynamique dans laquelle passent des gaz chauds et une enceinte d'alimentation en air de refroidissement d'un distributeur par exemple.

Elle concerne plus précisément un dispositif de maintien de joints à lamelles sur un distributeur interposé axialement entre deux éléments de structure, ledit distributeur étant constitué de plusieurs secteurs ayant des aubes directrices qui s'étendent entre des éléments de plate-forme intérieure et extérieure, l'un au moins desdits éléments de plate-forme comportant une lamelle d'étanchéité disposée radialement dans un espace séparant ledit élément de plate-forme d'un élément de structure adjacent afin d'assurer l'étanchéité aux fluides entre lesdits éléments, les lamelles correspondantes de deux secteurs adjacents étant jointives et leur jointure étant recouverte par un couvre-joint disposé entre lesdites lamelles jointives et un organe de maintien desdites lamelles en position d'étanchéité.

Les dispositifs d'étanchéité à lamelles sont communément utilisés pour assurer l'étanchéité aux fluides entre les enceintes annulaires interne et externe à la chambre de combustion, dans lesquels circulent l'air de refroidissement des distributeurs et des aubes mobiles, et la veine de gaz chauds délivrée par la chambre de combustion.

Ces lamelles sont disposées dans des espaces annulaires séparant des éléments de plate-forme d'un élément de structure et prennent appui, en position d'étanchéité, sur des génératrices desdits éléments.

Ces lamelles sont soumises aux pressions régnant sur leurs deux faces. En général, la pression des gaz de refroidissement est supérieure à la pression des gaz chauds et les lamelles sont disposées de telle manière que la différence de pression agit favorablement sur l'étanchéité recherchée. Toutefois, les turbomachines d'aviation étant soumises à des conditions de fonctionnement extrêmement variables, de nombreux problèmes peuvent survenir, dus notamment aux dilatations, aux vibrations et aux faibles différences de pression dans certaines phases de vol.

C'est pourquoi, les dispositifs d'étanchéité comportent des moyens de sollicitation pour pousser continuellement les lamelles dans la position d'étancheité.

FR 2 649 463 décrit ainsi un joint d'étanchéité à lamelles dans lequel les lamelles sont montées coulissantes sur des goupilles axiales et sont chargées par des ressorts comportant une partie montée sur la cheville.

FR 2 786 222 décrit des équerres de maintien des lamelles qui comportent une extrémité en appui contre la lamelle d'étanchéité et une deuxième extrémité recourbée en épingle et engagée dans une rainure de l'un des éléments de structure pour assurer le positionnement axial. Les lamelles et les équerres de maintien comportent des pattes recourbées afin que les équerres assurent en outre le positionnement axial des lamelles. Ce document prévoit une équerre de maintien supportée par deux secteurs de distributeur adjacents pour appuyer sur un couvre-joint.

Dans ces deux réalisations, les éléments élastiques agissent sur la lamelle portée par le secteur sur lequel est monté le ressort ou l'équerre de maintien.

Le dispositif de maintien selon l'invention est caractérisé par le fait qu'il est constitué d'une patte portée par chaque secteur et qui s'étend circonférentiellement à la périphérie dudit secteur, l'extrémité libre de ladite patte étant en appui sur le couvre-joint dans une zone angulaire externe audit secteur.

La patte est de préférence retenue sur le secteur par deux liaisons décalées angulairement. L'une des liaisons est avantageusement une liaison à glissière circonférentielle.

Cette disposition permet de limiter les déplacement angulaires de la patte et de maîtriser la position du point d'appui.

Les liaisons sont de préférence assurées par des rivets axiaux dont les tiges traversent des ouvertures ménagées dans la patte. Les lamelles sont également montées coulissantes sur les tiges de rivets.

La liaison à glissière est disposée de préférence à l'extrémité de la patte opposée à son extrémité libre et est axialement fixe. En revanche l'autre liaison de la patte est assurée par un système à épingle qui sollicite continûment ladite patte vers la lamelle

D'autres avantages et caractéristiques de l'invention ressortiront à la lecture de la description suivante faite à titre d'exemple et en référence aux dessins annexés dans lesquels :
La figure 1 représente une vue en coupe d'une partie de turbomachine qui illustre un exemple d'environnement dans lequel peut être utilisé le dispositif d'étanchéité selon l'invention ;
la figure 2 est une vue radiale de dessus du dispositif de maintien des lamelles de deux secteurs adjacents d'un distributeur ;
la figure 3 est une vue axiale en développé du dispositif de maintien de la figure 2 ;
la figure 4 est une vue en perspective de la patte de maintien selon l'invention ;
la figure 5 montre en perspective le dispositif de fixation par rivet et épingle de la patte de la figure 4 ; et
la figure 6 est une vue axiale d'un couvre-joint.

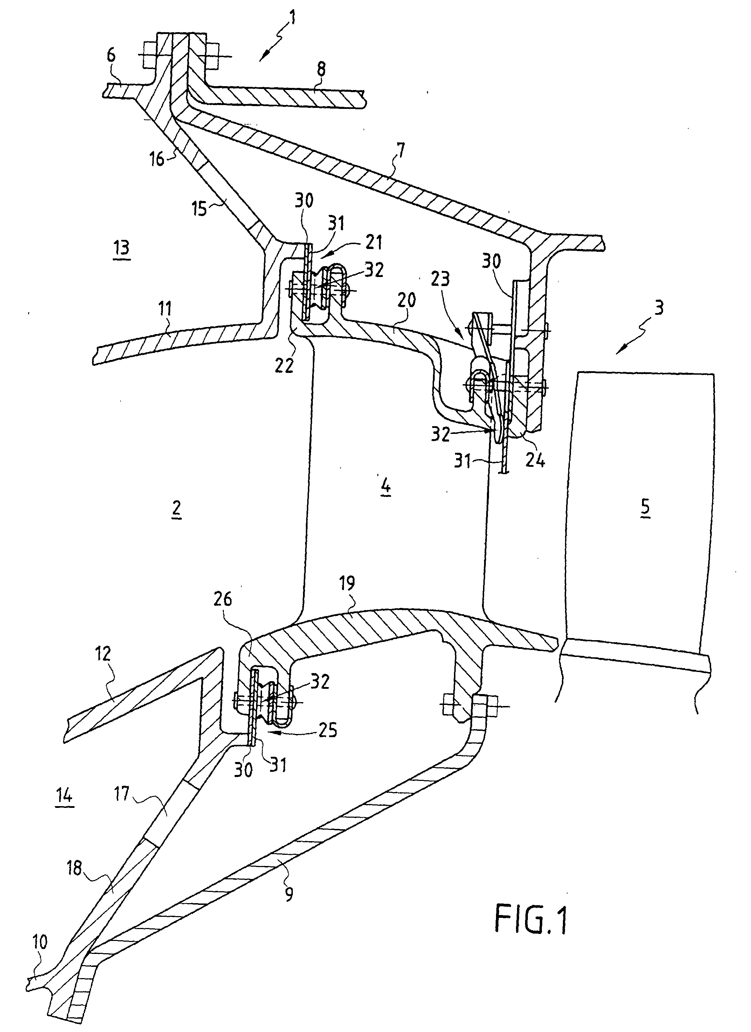

La turbomachine 1, montrée sur la figure 1, comporte une chambre de combustion 2, et une turbine à haute pression 3 constituée d'un ou plusieurs étages. Chaque étage de la turbine comporte une rangée d'aubes directrices 4 et une rangée d'aubes mobiles 5 disposées en alternance de manière connue. La turbine haute pression est supportée par une structure comportant, du côté radialement extérieur, un carter extérieur 6 de la chambre de combustion, une bague extérieure 7 de turbine et un carter 8 de turbine reliés ensemble par des boulons. Du côté radialement intérieur de la turbine 3, un carter intérieur 9 de la turbine est relié à un carter intérieur 10 de la chambre de combustion. La chambre de combustion 2 est annulaire et délimitée par une chemise extérieure 11 et une chemise intérieure 12. De façon classique, de l'air de refroidissement à haute pression circule autour de la chambre de combustion annulaire 2, dans l'enceinte annulaire extérieure 13 délimitée par le carter extérieur 6 et la chemise extérieure 11 de la chambre de combustion 2 et dans l'enceinte annulaire intérieure 14 délimitée par le carter intérieur 10 et la chemise intérieure 12 de la chambre de combustion 2. L'air de refroidissement s'écoule en aval à travers des orifices 15 ménagés dans la paroi 16 reliant les extrémités aval du carter extérieur 6 et de la chemise extérieure 11 de la chambre de combustion 2, afin de refroidir les aubes directrices 4, et à travers des orifices 17, ménagés dans la paroi 18 reliant les extrémités aval du carter intérieur 10 et de la chemise intérieure 12 de la chambre de combustion 2, afin de refroidir les plates formes intérieures 19 des aubes directrices 4.

De manière connue, la rangée d'aubes directrices 4 est réalisée sous forme de secteurs S monoblocs comportant chacun plusieurs aubes directrices 4 reliant un élément de plate-forme extérieure 20 et un élément de plate-forme intérieure 19. Il est nécessaire d'éviter toute fuite d'air entre les éléments de plate-forme 19, 20 des secteurs S et les éléments de structure adjacents.

Ainsi un premier joint d'étanchéité est interposé dans l'espace 21 entre l'extrémité amont 22 des éléments de plate-forme extérieure 20 et la paroi 16, dans l'espace 23 entre l'extrémité aval 24 des éléments de plate-forme extérieure 20 et la bague extérieure 7 de la turbine, et dans l'espace 25 entre l'extrémité amont 26 de la plate-forme intérieure 19 et la paroi 18.

Chacun de ces joints est constitué d'une pluralité de lamelles 30 courbes et jointives, chacune portée par une secteur S de distributeur et en appui sur un épaulement 40 formé dans le secteur S aux extrémités amont 22 et aval 24 de l'élément de plate-forme extérieure 20 et à l'extrémité amont 26 de l'élément de plate-forme intérieure 19. Ces lamelles 30 s'étendent radialement vers l'extérieur pour les lamelles obturant les espaces 21 et 23 et vers l'intérieur pour les lamelles 30 destinées à obturer l'espace 25, et comportent une génératrice en appui sur l'élément de structure adjacent.

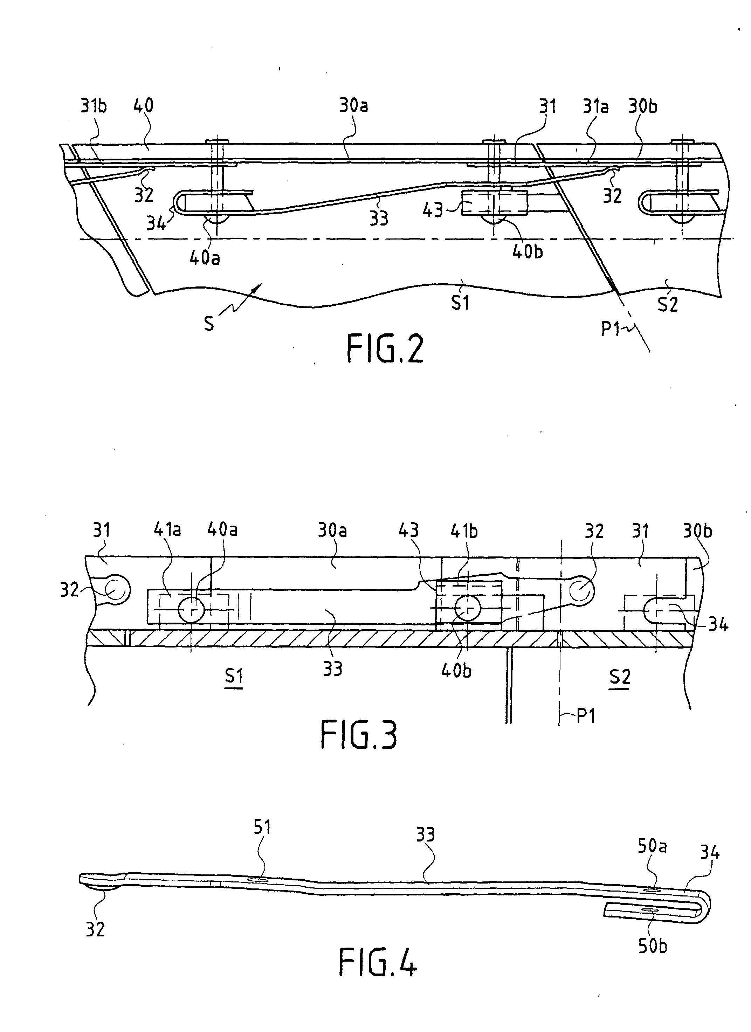

Deux lamelles adjacentes 30a, 30b d'un même joint sont jointives dans le plan P1 séparant deux secteurs consécutifs S1 et S2. Ainsi que cela se voit sur la figure 2, la jointure de ces deux lamelles 30a et 30b est recouverte par un couvre-joint 31 interposé entre les extrémités adjacentes de ces lamelles et un organe 32 sollicitant le joint en position d'étanchéité.

L'organe de maintien 32 est l'extrémité libre et arrondie d'une patte de maintien 33 retenue sur l'un des secteurs, S1 par exemple, au moyen de deux rivets 40a, 40b fixées respectivement sur des bossages 41a, 41b d'un élément de plate-forme 19 ou 20. Les tiges de ces rivets traversent des orifices ménagés en correspondance dans la patte de maintien 33, la lamelle 30a et des couvre-joint 31a et 31b. L'extrémité 34 de la patte 33, éloignée de l'extrémité libre 32 est recourbée en forme de U et comporte des orifices cylindriques 50a, 50b afin d'assurer une liaison fixe circonférentiellement, en conséquence cette extrémité 34 est immobilisée axialement. La liaison entre le rivet 40b et la patte 33 est assurée par un dispositif à épingle 43 qui sollicite la portion médiane de la patte 33 vers la lamelle 30a, cette liaison est libre circonférentiellement. Ainsi que cela est montré sur la figure 3, la patte 33 s'étend circonférentiellement sur l'élément de plate-forme du secteur S1, mais l'extrémité libre 32, qui est en appui sur le couvre-joint 31a, se trouve à l'extérieur du secteur S1, et dans l'exemple montré sur les figures 2 et 3, dans la zone angulaire du secteur S2. Sur la figure 3, on voit que le couvre-joint 31 comporte à ses extrémités des encoches opposées 35 traversées par des tiges de rivets adjacents portés par deux secteurs adjacents S1 et S2.

La figure 4 montre en perspective une patte de maintien 33. Les branches de son extrémité 34 comportent des orifices cylindriques alignés 50a et 50b qui sont traversés par la tige du rivet 40a. On voit également sur cette figure l'orifice oblong 51 traversé par la tige du rivet 40b, afin d'assurer un liaison à glissière circonférentiellement.

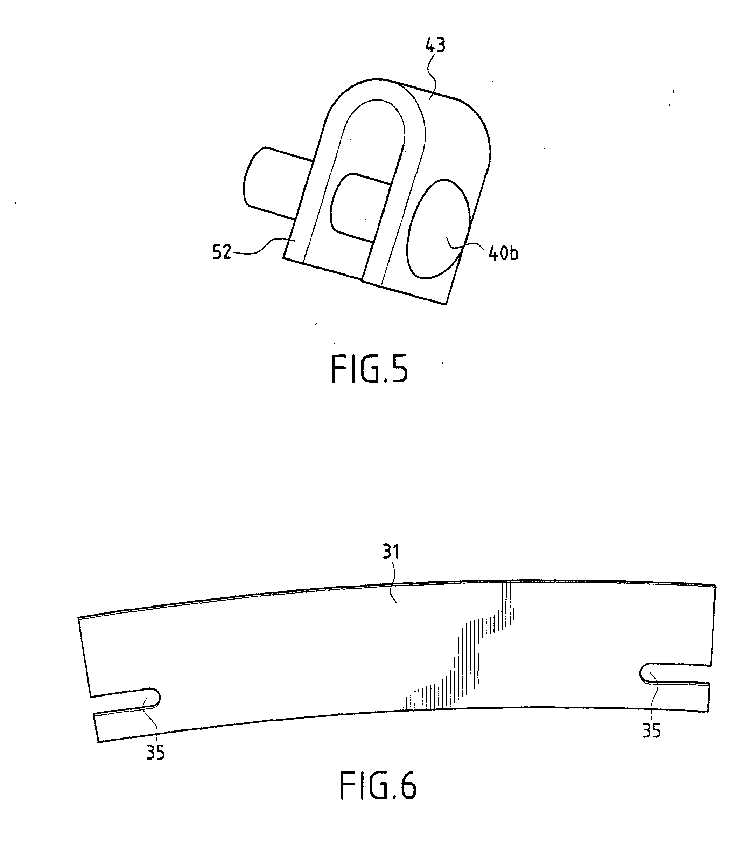

La figure 5 montre le rivet 40b, et l'épingle qui vient à cheval sur le bossage 41b, la partie 52 de l'épingle 43 est en appui sur la partie médiane de la patte 33 qui entoure l'orifice 51.

La figure 6 montre un couvre-joint 31 destiné à recouvrir les extrémités adjacentes de deux lamelles voisines 30a et 30b. Les extrémités de ce couvre-joint 31 présente des encoches opposées 35 traversées par les tiges de deux rivets voisins 40a et 40b montés sur deux secteurs adjacents

## Revendications

1. Turbomachine comprenant un distributeur interposé axialement entre deux éléments de structure, ledit distributeur étant constitué de plusieurs secteurs ayant des aubes directrices qui s'étendent entre des éléments de plate-forme intérieure et extérieure, l'un au moins desdits éléments de plate-forme comportant une lamelle d'étanchéité (30) disposée radialement dans un espace séparant ledit élément de plate-forme d'un élément de structure adjacent afin d'assurer l'étanchéité aux fluides entre lesdits éléments, les lamelles correspondantes de deux secteurs adjacents étant jointives et leur jointure étant recouvertes par un couvre-joint (31) disposé entre lesdites lamelles et un organe de maintien desdites lamelles en position d'étanchéité,
**caractérisée par le fait que** l'organe de maintien est constitué d'une patte (33) portée par un secteur (S1) et qui s'étend circonférentiellement à la périphérie dudit secteur, l'extrémité libre (32) de ladite patte (33) étant en appui sur le couvre-joint (31) dans une zone angulaire externe audit secteur (S1).

2. Turbomachine selon la revendication 1, **caractérisée par le fait que** la patte (33) est retenue sur le secteur (31) par deux liaisons décalées angulairement.

3. Turbomachine selon la revendication 2, **caractérisée par le fait que** l'une des liaisons est une liaison à glissière circonférentielle.

4. Turbomachine selon la revendication 3, **caractérisée par le fait que** les liaisons sont assurées par des rivets axiaux (40a, 40b) traversant des ouvertures ménagées dans la patte (33).

5. Turbomachine selon la revendication 4, **caractérisée par le fait que** la liaison à glissière est assurée par un système à épingle (43) sollicitant continûment ladite patte (33) vers la lamelle (30).

6. Turbomachine selon la revendication 5, **caractérisée par le fait que** l'autre liaison de la patte est disposée à l'extrémité (34) de la patte (33) opposée à l'extrémité libre (32) et est axialement fixe.

7. Turbomachine selon l'une quelconque des revendications 4 à 6, **caractérisée par le fait que** le couvre-joint (31) comporte des encoches (35) opposées à ses extrémités et **par le fait que** lesdites encoches sont traversées par des rivets voisins (40a, 40b) de deux secteurs adjacents (S1, S2).

## Patentansprüche

1. Turbotriebwerk mit einem Leitschaufelapparat, der axial zwischen zwei Aufbauelementen angeordnet ist, wobei dieser Leitschaufelapparat aus mehreren Sektoren mit Leitschaufeln besteht, die sich zwischen inneren und äußeren Plattform-Elementen erstrecken, wobei zumindest eines dieser Plattform-Elemente einen Dichtstreifen (30) aufweist, der radial in einem Zwischenraum angeordnet ist, welcher dieses Plattform-Element von einem angrenzenden Aufbauelement trennt, um die Flüssigkeitsdichtigkeit zwischen diesen Elementen zu gewährleisten, wobei die entsprechenden Streifen zweier aneinandergrenzender Sektoren aneinander stoßen und ihre Verbindung von einer Stoßlasche (31) überdeckt wird, die zwischen diesen aneinander stoßenden Streifen und einem Halteorgan für diese Streifen in Dichtposition angeordnet ist,
**dadurch gekennzeichnet,**
**dass** das Halteorgan von einer Zunge (33) gebildet wird, die an einem Sektor (S 1) sitzt und sich um die Außenumfangslinie dieses Sektors herum erstreckt, wobei sich das freie Ende (32) dieser Zunge (33) in einem außerhalb dieses Sektors (S1) befindlichen Winkelbereich in Anlage an der Stoßlasche (31) befindet.

2. Turbotriebwerk nach Anspruch 1,
**dadurch gekennzeichnet,**
**dass** die Zunge (33) an dem Sektor (S1) durch zwei winkelverschobene Verbindungen festgehalten wird.

3. Turbotriebwerk nach Anspruch 2,
**dadurch gekennzeichnet,**
**dass** die eine dieser Verbindungen eine außen umlaufende Gleitverbindung ist.

4. Turbotriebwerk nach Anspruch 3,
**dadurch gekennzeichnet,**
**dass** die Verbindungen durch axiale Nieten (40a, 40b) gewährleistet werden, die durch Öffnungen verlaufen, die in der Zunge (33) vorgesehen sind.

5. Turbotriebwerk nach Anspruch 4,
**dadurch gekennzeichnet,**
**dass** die Gleitverbindung durch ein Schäkelsystem (43) gewährleistet wird, das die Zunge (33) ständig zu dem Dichtstreifen (30) hin belastet.

6. Turbotriebwerk nach Anspruch 5,
**dadurch gekennzeichnet,**
**dass** die andere Verbindung der Zunge (33) an dem entgegengesetzten Ende (34) zu dem freiem Ende (32) der Zunge (33) angeordnet ist und axial fest ist.

7. Turbotriebwerk nach einem der Ansprüche 4 bis 6,
**dadurch gekennzeichnet,**
**dass** die Stoßlasche (31) an ihren Enden voneinander abgewandte Rasten (35) aufweist, und dass durch diese Rasten Schäfte von nebeneinander liegenden Nieten (40a, 40b) zweier aneinandergrenzender Sektoren (S1, S2) verlaufen.

## Claims

1. Turbomachine comprising a nozzle interposed axially between two structural elements, the said nozzle consisting of a plurality of sectors having guide vanes which extend between inner and outer platform elements, at least one of the said platform elements including a sealing strip (30) arranged radially in a space separating the said platform element from an adjacent structural element so as to provide fluid tightness between the said elements, the corresponding strips of two adjacent sectors being contiguous and their joint being covered by a joint cover (31) arranged between the said strips and a retaining member for retaining the said strips in the sealing position, **characterized in that** the retaining member consists of a clip (33) carried by a sector (S1) and extending circumferentially at the periphery of the said sector, the free end (32) of the said clip (33) bearing against the joint cover (31) in an angular region outside the said sector (S1).

2. Turbomachine according to Claim 1, **characterized in that** the clip (33) is held on the sector (S1) by means of two angularly offset connections.

3. Turbomachine according to Claim 2, **characterized in that** one of the connections is a circumferential sliding connection.

4. Turbomachine according to claim 3, **characterized in that** the connections are provided by axial rivets (40a, 40b) passing through openings formed in the clip (33).

5. Turbomachine according to Claim 4, **characterized in that** the sliding connection is provided by a hairpin system (43) continuously urging the said clip (33) towards the strip (30).

6. Turbomachine according to Claim 5, **characterized in that** the other connection of the clip is arranged at the end (34) of the clip (33) remote from the free end (32) and is axially fixed.

7. Turbomachine according to any one of Claims 4 to 6, **characterized in that** the joint cover (31) has opposed notches (35) at its ends, and **in that** the said notches have neighbouring rivets (40a, 40b) of two adjacent sectors (S1, S2) passing through them.
